Europäisches Patentamt

(19) European Patent Office

Office européen des brevets

(11) Numéro de publication: **0 050 548**
**B1**

(12) FASCICULE DE BREVET EUROPEEN

(45) Date de publication du fascicule du brevet:
16.01.85

(51) Int. Cl.⁴: **C 09 J 3/14, C 08 L 31/04,
C 08 L 51/00**

(21) Numéro de dépôt: 81401551.7

(22) Date de dépôt: 07.10.81

(54) Colles à prise rapide à base de latex aqueux de polymère d'acetate de vinyle plastifié.

(30) Priorité: 16.10.80 FR 8022108
30.06.81 FR 8112812

(43) Date de publication de la demande:
28.04.82 Bulletin 82/17

(45) Mention de la délivrance du brevet:
16.01.85 Bulletin 85/3

(84) Etats contractants désignés:
AT BE CH DE FR GB IT LI LU NL SE

(56) Documents cités:
FR - A - 1 419 673
FR - A - 1 603 636
FR - A - 2 083 873

Le dossier contient des informations techniques
présentées postérleurement au dépôt de la demande et
ne figurant pas dans le présent fascicule.

(73) Titulaire: RHONE-POULENC SPECIALITES CHIMIQUES,
"Les Miroirs" 18, Avenue d'Alsace, F-92400 Courbevoie
(FR)

(72) Inventeur: Schuppiser, Jean-Luc, 12, Allée d'Apollon
Gressy, F-77410 Claye Souilly (FR)
Inventeur: Daniel, Jean-Claude, 13, rue de Neuilly,
F-94120 Fontenay/S/Bois (FR)

(74) Mandataire: Lepere, Michelle et al, RHONE POULENC
RECHERCHES Service Brevets Chimie et
Polymères 25, Quai Paul Doumer, F-92408 Courbevoie
Cedex (FR)

ACTORUM AG

# Description

L'invention a pour objet des colles à prise rapide pour matériaux poreux à base latex aqueux de polymère d'acétate de vinyle desdites colles.

Les latex de polymères ou de copolymères d'acétate de vinyle associés à de l'alcool polyvinylique sont des constituants de base bien connus de compositions adhésives (brevets français n° 1 419 673, n° 1 603 636, n° 2 083 873); les quantités d'alcool polyvinylique présentes sont toujours relativement importantes (au moins 4% par rapport au poids d'extrait sec des latex).

Les colles pour matériaux poreux, à base de latex aqueux de polymère d'acétate de vinyle contenant de l'alcool polyvinylique comme colloïde protecteur, et d'agents de plastification internes ou externes possèdent généralement des temps de prise beaucoup trop élevés pour pouvoir être utilisées sur les machines automatiques actuelles.

Sur ces machines sont utilisées généralement des colles de type «Hot Melt», c'est-à-dire des mélanges de résines, qui sont appliqués sur les matériaux poreux à l'état fondu. Cependant, de telles colles nécessitent un stockage à température élevée, peuvent être dégradées lorts du stockage et de la mise en œuvre par le chauffage nécessaire à leur fusion et leur manipulation peut être dangereuse à cause du risque de projection de matière en fusion.

Les colles, objet de l'invention, ne présentent pas ces inconvénients, elles peuvent être utilisées sur les machines automatiques actuelles, ne sont pas à l'état fondu et par suite ne présentent aucune précaution de stockage et aucun risque de manipulation.

Ce sont des colles à base de latex aqueux de polymère d'acétate de vinyle plastifié, contenant au moins un alcool polyvinylique comme colloïde protecteur, caractérisées en ce que dans le latex la concentration en matières sèches est comprise entre 50 et 70% en poids, la taille des particules de polymère d'acétate de vinyle ayant une masse moléculaire en poids de 10 000 à 300 000 est comprise entre 0,1 et 3μm, le ou les alcools polyvinyliques représentent 0,5 à 3% en poids du polymère et un agent de plastification éventuel peut représenter 0 à 30% en poids du polymère et en ce que leur temps de prise est inférieur à 10 secondes.

Dans les latex, base des colles, la concentration en matières sèches est comprise entre 50 et 70% en poids, et de préférence entre 55 et 65% en poids et les particules de polymère ont un diamètre moyen compris entre 0,1 et 3μm avec une répartition granulométrique qui peut être large ou étroite suivant les conditions de polymérisation mises en œuvre.

Par polymère de l'acétate de vinyle, on entend les homopolymères ainsi que les copolymères de ce monomère avec au moins un monomère copolymérisable choisi parmi les esters d'acides insaturés mono- ou di-carboxyliques possédant 3 à 6 atomes de carbone et d'alcools possédant 1 à 10 atomes de carbone, comme les acrylates, méthacrylates, maléates, fumarates de méthyle, d'éthyle, de butyle, d'éthylhexyle; les esters vinyliques d'acides saturés monocarboxyliques ayant 3 à 15 atomes de carbone, comme le pivalate, le laurate de vinyle; les oléfines possédant 2 à 5 atomes de carbone, comme l'éthylène, le propylène, les butènes; le chlorure de vinyle et le chlorure de vinylidène. Dans le copolymère, le monomère copolymérisable peut représenter de 1 à 70% en poids et de préférence de 5 à 50% en poids.

Certains des monomères copolymérisables énumérés ci-dessus possèdent un pouvoir plastifiant vis à vis du polyacétate de vinyle, c'est à dire qu'ils donnent des copolymères dont la température de transition vitreuse est inférieure à la température de transition vitreuse du polyacétate de vinyle. Il y a alors plastification interne, qui peruet de limiter la quantité d'agent de plastification à ajouter au latex obtenu et même de le supprimer. Ceci présente l'avantage d'éviter la migration de l'agent de plastification dans la colle et de permettre l'utilisation de ladite colle dans l'emballage alimentaire.

Le ou les alcools polyvinyliques présents dans le latex en quantités comprises entre 0,5 et 3% et de préférence entre 0,75 et 1,5% en poids par rapport au polymère, sont choisis parmi les alcools polyvinyliques possédant une viscosité mesurée sur une solution aqueuse à 4% en poids, de 2 à 50 mPa.s. et un indice d'ester de 80 à 180 et de préférence de 100 à 150.

Quant à l'agent de plastification, qui représente 0 à 30% en poids et de préférence 2 à 20% en poids du polymère, il est seul ou en mélange et choisi parmi les plastifiants et agents de coalescence classiques du polyacétate de vinyle, tels que les phtalates d'alkyle (4–6C) halogénés ou non, comme les phtalates de dibutyle, de diéthyle, de butylbenzyle, de trichloréthyle; les phtalate, adipate et dibenzoate d'éthylène glycol, l'acétate de butylcarbitol, le glycolate de butyle, la triacétine de glycérol, les succinates, glutarates et adipates dipropyliques ou diisobutyliques, les phosphates de tricrésyle et de triphényle.

Cet agent de plastification est présent dans le latex lorsque le polymère est un homopolymère d'acétate de vinyle ou un copolymère dans lequel le monomère copolymérisable ne possède pas de pouvoir plastifiant ou possède un pouvoir plastifiant insuffisant, ou encore n'est pas utilisé en quantité suffisante pour plastifier le copolymère.

Le procédé de préparation des colles à prise rapide à base de latex aqueux de polymère d'acétate de vinyle plastifié consiste à polymériser en émulsion aqueuse de l'acétate de vinyle seul ou avec au moins un monomère copolymérisable en présence d'au moins un alcool polyvinylique, puis éventuellement à ajouter au moins un agent de plastification au latex formé et est caractérisé en ce que le milieu de polymérisation, dont le pH est compris entre 2,5 et 6, contient de l'eau, 40 à 65% en poids du milieu d'acétate de vinyle ou d'un mélange acétate de vinyle-monomère copolymérisable, 1 à 10% en poids du ou des monomères d'au moins un agent limiteur de chaine et 0,5 à 3% en poids du mélange monomère(s)-agent limiteur de chaîne d'au moins un alcool polyvinylique et en ce que l'agent de plastification représente 0 à 30% en poids du polymère formé.

La polymérisation est effectuée en émulsion, de façon en soi connue, en présence d'au moins un initiateur et éventuellement d'un ou plusieurs agents émulsifiants et/ou d'un ou plusieurs régulateurs de pH.

Les monomères copolymérisables avec l'acétate de vinyle sont représentés par les esters d'acides insaturés mono- ou dicarboxyliques possédant 3 à 6 atomes de carbone et d'alcools possédant 1 à 10 atomes de carbone, comme les acrylates, méthacrylates, maléates, fumarates de méthyle, d'éthyle, de butyle, d'éthylhexyle; les esters vinyliques d'acides saturés monocarboxyliques ayant 3 à 15 atomes de carbone, comme le pivalate, le laurate de vinyle; les oléfines possédant 2 à 5 atomes de carbone, comme l'éthylène, le propylène, les butènes; le chlorure de vinyle et le chlorure de vinylidène. Ces monomères sont mis en œuvre seuls ou en mélange en proportions comprises entre 1 et 70% et de préférence entre 5 et 50% en poids du mélange acétate de vinyle-monomère copolymérisable.

Suivant le procédé, l'acétate de vinyle et le ou les comonomères sont introduits dans le milieu de polymérisation seuls ou en mélange, soit en totalité avant polymérisation ou en cours de polymérisation par fractions successives ou en continu, soit en partie avant polymérisation et l'autre partie en cours de polymérisation par fractions successives ou en continu, sous pression si le comonomère est gazeux.

L'agent limiteur de chaine est représenté, entre autres par des hydrocarbures halogénés, tels que chlorure de méthylène, chloroforme, tétrachlorure de carbone, bromoforme, tétrabromure de carbone, dichloréthane, trichloréthane et de préférence par des mercaptans, tels que laurylmercaptan, dodécylmercaptan, aminophénylmercaptan. Il est introduit, seul ou en mélange, de toute façon connue en soi, telle que par exemple, en même temps que le ou l'un des monomères ou que le mélange des monomères, soit simultanément, soit plus particulièrement en solution dans le(s) monomère(s), ou l'un des monomères.

L'alcool polyvinylique mis en œuvre à raison de 0,5 à 3% en poids et de préférence 0,75 à 1,5% en poids par rapport au mélange monomère(s)-agent limiteur de chaîne, en tant que colloide protecteur, influe sur la stabilité de l'émulsion. Il possède une viscosité, mesurée sur une solution aqueuse à 4% en poids, comprise entre 2 et 50 mPa.s. et un indice d'ester compris entre 80 et 180 et de préférence entre 100 et 150. Tout alcool polyvinylique classique répondant à ces caractéristiques peut être utilisé seul ou en mélange avec un autre alcool polyvinylique de caractéristiques différentes, mais comprises dans les limites données ci-dessus.

En tant qu'initiateur, on utilise de préférence des persulfates alcalins, des dérivés diazoïques hydrosolubles ou des systèmes redox à base d'eau oxygénée, de peroxydes organiques ou d'hydroperoxydes, seuls ou en mélange, dans des proportions de l'ordre de 0,05 à 4,5% et de préférence 0,1 à 2% en poids des monomères. Il est introduit dans le milieu de polymérisation en totalité avant polymérisation ou en cours de polymérisation par fractions successives ou en continu, ou encore en partie avant polymérisation, l'autre partie étant ajoutée en cours de polymérisation par fractions successives ou en continu, particulièrement lorsque la durée de vie de l'initiateur à la température de polymérisation est faible.

Le ou les agents émulsifiants, qui assurent la stabilité du milieu réactionnel et du latex à obtenir, peuvent être anioniques et/ou non ioniques et sont des produits classiques de la polymérisation en émulsion.

Parmi les agents émulsifiants anioniques, peuvent être cités les sels d'acides gras; les alkylsulfates, alkylsulfonates, alkylarylsulfonates, alkylsulfosuccinates, alkylphosphates alcalins; les sulfosuccinates d'alkyle; les sulfonates d'éthers alkylphénolpolyglycoliques; les sels d'esters d'acides alkylsulfopolycarboxyliques; les produits de condensation des acides gras avec les acides oxy-et amino-alcanesulfoniques; les dérivés sulfatés des éthers polyglycoliques; les esters sulfatés d'acides gras et de polyglycols; les alcanolamides d'acides gras sulfatés.

Parmi les agents émulsifiants non ioniques, sont à mentionner les esters gras de polyalcools, les alcanolamides d'acides gras, les polyoxydes d'éthylène, les copolyoxydes d'éthylène et de propylène, les alkylphénols oxyéthylénés, les alkylphénols oxyéthylénés et sulfatés.

Les quantités d'agent(s) émulsifiant(s) à mettre en œuvre sont de l'ordre de 0 à 2% en poids par rapport au(x) monomère(s) et l'introduction est effectuée soit en totalité avant la polymérisation, soit en partie avant la polymérisation, la partie complémentaire étant ajoutée au milieu réactionnel au cours de la polymérisation par fractions successives ou en continu, soit encore en totalité au cours de la polymérisation par fractions successives ou en continu, suivant le diamètre moyen des particules du latex à obtenir.

Le régulateur de pH, qui maintient le milieu de polymérisation à un pH de 2,5 à 6, est représenté notamment par une base, telle que la soude ou l'ammoniaque et/ou par un tampon, tel que l'acétate de sodium ou le bicarbonate de sodium. Il est ajouté, seul ou en mélange, au milieu en totalité ou en partie avant la polymérisation, la partie complémentaire étant ajoutée au cours de la polymérisation par fractions successives ou en continu, ou encore en totalité au cours de la polymérisation par fractions successives ou en continu.

La température de polymérisation, fonction de l'initiateur mis en œuvre et du polymère à obtenir, est généralement comprise entre 25 et 90 °C.

Lorsque la polymérisation est terminée, si cela est nécessaire, un agent de plastification peut être ajouté au latex formé en une quantité n'excédant pas 30% et de préférence de l'ordre 2 à 20% en poids du polymère, pour obtenir une colle. Cet agent de plastification, mis en oeuvre seul ou en mélange, est choisi parmi les plastifiants et agents de coalescence classiques du polyacétate de vinyle, tels que les phtalates d'alkyle (4–6C) halogénés ou non, comme les phtalates de dibutyle, de diéthyle, de butylbenzyle, de trichloréthyle; les phtalate, adipate et dibenzoate d'éthylène glycol, l'acétate de butylcarbitol, le glycolate de butyle, la triacétine de glycérol, les succinates, glutarates, adipates dipropyliques ou diisobutyliques, les phosphates de tricrésyle et de triphényle.

Il est bien évident que l'on ne sort pas du domaine de l'invention en ajoutant aux colles tous les adjuvants classiques, tels que solvants légers comme le chlorure de méthylène, charges comme les carbonates alcalins, biocides, antimousses, etc.

Les colles à base de latex aqueux de polymères de l'acétate de vinyle, selon l'invention peuvent être appliquées sur toutes les machines de collage à grande vitesse permettant de traiter les matériaux poreux, tels que bois, papiers et cartons. Ces colles sont utilisées plus particulièrement dans les industries de l'emballage.

On donne, ci-après, à titre indicatif et non limitatif des exemples de réalisation de l'invention, dans lesquels:

— les pourcentages sont en poids;

— la viscosité de l'alcool polyvinylique est mesurée par écoulement dans un tube capillaire d'une solution aqueuse à 4% en poids, à 20 °C;

— La viscosité du latex est mesurée à 23 °C, au viscosimètre Brookfield, vitesse 50 t/mn;

— La masse moléculaire en poids du polymère est mesurée par chromatographie sur gel ou par viscosimétrie;

— Le temps de prise de la colle sous une charge de 20 g/cm est le temps nécessaire pour que deux morceaux de cartons, à 280 g/m$^2$ et d'indice COBB (30s) de 71 g/m$^2$, collés préalablement par dépôt de 30 à 35 g de colle/m$^2$ de carton, avec un temps ouvert d'environ 3/10s et une force de collage de 400 g/cm linéaire, ne se séparent plus lorsqu'on les soumet à une charge de 20 g/cm, à 20 °C sous 65% d'humidité relative.

Exemple 1

Dans un ballon de 4 litres muni d'un agitateur et d'un réfrigérant ascendant, sont introduits successivement:

— 900 g d'eau déminéralisée;

— 53 g d'une solution aqueuse à 13% d'alcool polyvinylique dont la viscosité est de 4 mPa.s. et l'indice d'ester de 125 (A);

— 14 g d'une solution aqueuse à 12% d'alcool polyvinylique dont la viscosité est de 25 mPa.s. et l'indice d'ester de 140 (B);

— 16,5 g d'une solution aqueuse à 25% d'alkylphénol oxyéthyléné et sulfaté;

— 2 g de bicarbonate de sodium.

Le mélange obtenu est alors chauffé à 80 °C, température qui est maintenue pendant toute la durée de la polymérisation. Dès que le mélange est à 80 °C, 1,7 g de persulfate d'ammonium dissous dans 10 cm$^3$ d'eau sont ajoutés.

Un mélange formé de 1700 g d'acétate de vinyle et 85 g de laurylmercaptan et une solution de 1,7 g de persulfate de potassium dans 100 cm$^3$ d'eau sont introduits simultanément, en continu, en 5 h 30.

Le mélange réactionnel est encore maintenu 1 h à 80 °C, puis refroidi.

2830 g d'un latex de polyacétate de vinyle sont obtenus avec les caractéristiques suivantes:

| | |
|---|---|
| – pH: | 3,9 |
| – viscosité: | 7440 mPa.s |
| – concentration: | 61% |
| – taille des particules: | 0,4–1,5 μm |
| – masse moléculaire du polymère: | 30 000 |

Le latex est divisé en 4 parties égales, auxquelles sont ajoutées des quantités différentes de phtalate de dibutyle afin d'obtenir des colles dont les temps de prise sont mesurés. Les résultats suivants sont obtenus.

| Phtalate de dibutyle % par rapport au polymère | Temps de prise s. |
|---|---|
| 0 | > 60 |
| 7 | 6,5 |
| 12 | 5 |
| 16 | 8,4 |

Exemple 2

L'exemple 1 est répété avec:

— 850 g d'eau déminéralisée;

— 106 g de la solution (A) d'alcool polyvinylique au lieu de 53 g;

— 28 g de la solution (B) d'alcool polyvinylique au lieu de 14 g.

2900 g de latex sont obtenus, dont les caractéristiques sont les suivantes:

| | |
|---|---|
| – pH | 3,6 |
| – viscosité | 8800 mPa.s |
| – concentration | 61,1% |
| – taille des particules | 0,4–2μm |
| – masse moléculaire du polymère | 30 000 |

L'addition de quantités différentes de phtalate de dibutyle donne des colles dont les temps de prise sont les suivants:

| Phtalate de dibutyle % par rapport au polymère | Temps de prise s. |
|---|---|
| 0 | 33 |
| 2 | 8,4 |
| 7 | 4 |
| 9 | 3,6 |
| 12 | 3,2 |
| 16 | 3,6 |

A titre comparatif, le même essai réalisé sans laurylmercaptan donne un latex avec les caractéristiques:

| | |
|---|---|
| – pH: | 4 |
| – viscosité | 7800 mPa.s |
| – concentration | 63,3% |
| – taille des particules | 0,6–2 μm |
| – masse moléculaire | 200 000 |

Sans phtalate de dibutyle et avec 16% de phtalate de dibutyle, le temps de prise des colles obtenues est supérieur à 30s.

Exemple 3

En opèrant de la même façon que dans l'exemple 2, mais avec 51 g de laurylmercaptan au lieu de 85 g, on obtient un latex de caractéristiques:
- pH                               3,8
- viscosité                        13 000 mPa.s
- concentration                    62%
- taille des particules            0,4–2 μm
- masse moléculaire du polymère    55 000

L'addition d'un plastifiant donne des colles ayant les temps de prise suivants:

| Phtalate de dibutyle % par rapport au polymère | Temps de prise s. |
|---|---|
| 0 | 58 |
| 12 | 4,8 |
| 16 | 7,4 |

Exemple 4

L'exemple 1 est répété avec:
- 710 g d'eau déminéralisée au lieu de 900 g;
- 212 g de la solution (A) d'alcool polyvinylique au lieu de 53 g;
- 56 g de la solution (B) d'alcool polyvinylique au lieu de 14 g;
- 34 g de laurylmercaptan au lieu de 85 g.
Les caractéristiques du latex sont:
- pH                               4
->viscosité                        21 000 mP.s.
- concentration                    60,1%
- taille des particules            0,2–2 μm
- masse moléculaire du polymère    80 000

Par addition de phtalate de dibutyle, des colles sont obtenues qui présentent les temps de prise suivants:

| Phtalate de dibutyle % par rapport au polymère | Temps de prise s. |
|---|---|
| 0 | 88 |
| 7 | 9,7 |
| 12 | 4,9 |
| 16 | 5,8 |

Exemple 5

L'exemple 2 est répété, en remplaçant les solutions (A) et (B) par 134 g d'une solution à 13% d'un alcool polyvinylique de viscosité 25 mPa.s. et d'indice d'ester 100.
Les caractéristiques du latex sont:
- pH                               3,9
- viscosité                        3760 mPa.s.
- concentration                    61,4%
- taille des particules            0,4–2 μm
- masse moléculaire du polymère    30 000

L'addition de 7% de phtalate de dibutyle donne une colle avec un temps de prise de 9,5 s, alors que sans phtalate, le temps de prise est de 12,4 s.

Exemple 6

L'exemple 2 est répété avec:
- 42,5 g de laurylmercaptan au lier de 85 g
Les caractéristiques du latex sont:
- pH                               3,8
- viscosité                        11 200 mPa.s.
- concentration                    61,4%
- taille des particules            0,4–2 μm
- masse moléculaire du polymère    70 000

L'addition de différents agents de plastification à raison de 10% par rapport au polymère donne:

| Agent de plastification | Temps de prise s. |
|---|---|
| 0 | >60 |
| Acétate de butylcarbitol | 4 |
| Glycolate de butyle | 4,2 |
| Mélange de succinate, glutarate et adipate dipropyliques | 5,4 |
| Triacétine de glycérol | 9 |

Exemple 7

Dans un ballon de 4 litres muni d'un agitateur et d'un réfrigérant, sont introduits successivement:
- 830 g d'eau déminéralisée;
- 116 g d'une solution aqueuse à 13% d'alcool polyvinylique dont la viscosité est de 4 mPa.s. et l'indice d'ester de 125 (A);
- 29 g d'une solution aqueuse à 12% d'alcool polyvinylique dont la viscosité est de 25 mPa.s. et l'indice d'ester de 140 (B);
- 16,5 g d'une solution aqueuse à 25% d'alkylphénol oxyéthyléné et sulfaté;
- 3 g de bicarbonate de sodium.

Le mélange obtenu est alors chauffé à 80 °C, température qui est maintenue pendant toute la durée de la polymérisation. Dés que le mélange est à 80 °C, 2,5 g de persulfate d'ammonium dissous dans 10 cm$^3$ d'eau sont ajoutés.

Un mélange formé de 1360 g d'acétate de vinyle, 340 g de maléate de butyle et 85 g de laurylmercaptan et une solution de 4 g de persulfate de potassium dans 100 cm$^3$ d'eau sont introduits simultanément, en continu, en 6 h.

Le mélange réactionnel est encore maintenu 1 h à 80 °C, puis refroidi.

2780 g d'un latex de copolymère d'acétate de vinyle/maléate de butyle 80/20 sont obtenus avec les caractéristiques suivantes:
- pH                               3,7
- viscosité                        5520 mPa.s
- concentration                    61,3%
- taille des particules            0,4–1,5 μm
- masse moléculaire du copolymère  30 000

Le copolymère étant plastifié par le maléate de butyle, le latex donne une colle dont le temps de prise est de 7 s.

Exemple 8

L'exemple 7 est répété avec un mélange de 1275 g d'acétate de vinyle au lieu de 1360 g et de 425 g de maléate de butyle au lieu de 340 g.

2780 g de latex de copolymère acétate de vinyle/maléate de butyle 75/25 sont obtenus, dont les caractéristques sont les suivantes:

- pH 3,8
- viscosité 3520 mPa.s
- concentration 61%
- taille des particules 0,4–1,5 μm
- masse moléculaire
du copolymère 30 000
- temps de prise de la colle 6,6 s.

### Exemple 9

Dans un ballon de 4 litres muni d'un agitateur et d'un réfrigérant ascendant, sont introduits successivement:
- 830 g d'eau déminéralisée;
- 116 g d'une solution aqueuse à 13% d'alcool polyvinylique dont la viscosité est de 4 mPa.s. et l'indice d'ester de 125 (A);
- 29 g d'une solution aqueuse à 12% d'alcool polyvinylique dont la viscosité est de 25 mPa.s. et l'indice d'ester de 140 (B);
- 16,5 g d'une solution aqueuse à 25% d'alkylphénol oxyéthyléné et sulfaté;
- 2 g de bicarbonate de sodium.

Le mélange obtenu est alors chauffé à 80 °C, température qui est maintenue pendant toute la durée de la polymérisation. Dès que le mélange est à 80 °C, 1,7 g de persulfate d'ammonium dissous dans 10 cm$^3$ d'eau est ajouté.

Un mélange formé de 1530 g d'acétate de vinyle, 170 g d'acrylate de butyle et 85 g de laurylmercaptan et une solution de 3,4 g de persulfate de potassium dans 100 cm$^3$ d'eau sont introduits simultanément, en continu, en 5 h 30.

Le mélange réactionnel est encore maintenu 1 h à 80 °C, puis refroidi.

2780 g d'un latex de copolymère acétate de vinyle/acrylate de butyle 90/10 sont obtenus avec les caractéristiques suivantes:
- pH 3,9
- viscosité 6800 mPa.s
- concentration 61,6%
- taille des particules 0,4–1,5 μm
- masse moléculaire
du copolymère 30 000
- temps de prise de la colle 7 s.

L'addition de 5% de phtalate de dibutyle par rapport au copolymère donne une colle dont le temps de prise est de 5 s.

### Exemple 10

L'exemple 9 est répété avec 1360 g d'acétate de vinyle au lieu de 1530 g et 340 g d'acrylate de butyle au lieu de 170 g.

2780 g d'un latex de copolymère acétate de vinyle/acrylate de butyle 80/20 sont obtenus avec les caractéristiques suivantes:
- pH 3,8
- viscosité 4800 mPa.s
- concentration 61,3%
- taille des particules 0,4–1,5 μm
- masse moléculaire
du copolymère 30 000
- temps de prise de la colle 6,5 s.

### Exemple 11

Dans un autoclave de 4 litres muni d'un agitateur sont introduits successivement:
- 893 g d'eau déminéralisée;
- 77 g d'une solution aqueuse à 20% d'alcool polyvinylique dont la viscosité est de 4 mPa.s. et l'indice d'ester de 125 (A);
- 32 g d'une solution aqueuse à 12% d'alcool polyvinylique dont la viscosité est de 25 mPa.s. et l'indice d'ester de 140 (B);
- 18 g d'une solution aqueuse à 25% d'alkylphénol oxyéthyléné et sulfaté;
- 2 g de bicarbonate de sodium.

Après avoir fait le vide dans l'autoclave pour le dégazer, de l'éthylène est introduit jusqu'à avoir une pression de 20 bars dans l'autoclave, pression qui est maintenue constante pendant la durée de la polymérisation par l'addition d'éthylène.

Le mélange obtenu est alors chauffé à 80 °C, température qui est maintenue pendant toute la durée de la polymérisation. Dès que le mélange est à 80 °C, 2 g de persulfate d'ammonium dissous dans 100 cm$^3$ d'eau sont ajoutés.

Un mélange formé de 1653 g d'acétate de vinyle et 57 g de laurylmercaptan et une solution de 4 g de persulfate de potassium dans 100 cm$^3$ d'eau sont introduits simultanément, en continu, en 5 h.

L'introduction d'éthylène est alors interrompue et le mélange réactionnel est encore maintenu 1 h à 80 °C, puis refroidi.

3080 g d'un latex de copolymère acétate de vinyle/éthylène 90/10 sont obtenus avec les caractéristiques suivantes:
- pH 3,9
- viscosité 860 mPa.s
- concentration 60%
- taille des particules 0,4–1,5 μm
- masse moléculaire
du copolymère 200 000
- temps de prise de la colle 8 s.

### Exemple 12

L'exemple 11 est répété avec 1672 g d'acétate de vinyle au lieu de 1653 g et avec une pression d'éthylène dans l'autoclave de 13 bars au lieu de 20 bars.

3070 g d'un latex de copolymère acétate de vinyle/éthylène 92/8 sont obtenus avec les caractéristiques suivantes:
- pH 4
- viscosité 920 mPa.s
- concentration 58%
- taille des particules 0,4–1,5 μm
- masse moléculaire
du copolymère 200 000
- temps de prise de la colle 8,4 s.

L'addition de 3% de phtalate de dibutyle par rapport au copolymère donne une colle dont le temps de prise est de 7 s.

**Revendications pour les Etats contractants: BE, CH, DE, FR, GB, IT, LI, LV, NL, SE**

1. Colles à base de latex aqueux de polymère d'acétate de vinyle plastifié, contenant au moins un alcool polyvinylique comme colloide protecteur, caractérisées en ce que dans le latex la concentration en matières sèches est comprise entre 50 et 70% en poids, la taille des particules de polymère d'acétate de vinyle ayant une masse moléculaire en poids de 10 000 à 300 000 est comprise entre 0,1 et 3 µm, le ou les alcools polyvinyliques représentent 0,5 à 3% en poids du polymère et un agent de plastification éventuel peut représenter 0 à 30% en poids du polymère et en ce que leur temps de prise est inférieur à 10 secondes.

2. Colles suivant la revendication 1, caractérisées en ce que le polymère d'acétate de vinyle est un homopolymère.

3. Colles suivant la revendication 1, caractérisées en ce que le polymère d'acétate de vinyle est un copolymère de ce monomère avec un monomère copolymérisable représenté par les esters d'acides insaturés mono- ou di-carboxyliques (3–6C) et d'alcools (1–10C), les esters vinyliques d'acides saturés monocarboxyliques (3–15C), les oléfines (2–5C), le chlorure de vinyle, le chlorure de vinylidène.

4. Colles suivant les revendications 1 à 3, caractérisées en ce que le ou les alcools polyvinyliques possèdent une viscosité comprise entre 2 et 50 mPa.s. et un indice d'ester compris entre 80 et 180.

5. Colles suivant les revendications 1 à 4, caractérisées en ce que l'agent de plastification, seul ou en mélange, est choisi parmi les phtalates d'alkyle (4–6C) halogénés ou non, les phtalate, adipate, dibenzoate d'éthylène glycol, l'acétate de butylcarbitol, le glycolate de butyle, la tracétine de glycérol, les succinates, glutarates, asipates dipropyliques ou diisobutyliques, les phosphates de tricrésyle et de triphényle.

6. Procédé de préparation des colles suivant les revendications 1 à 5 qui consiste à polymériser en émulsion aqueuse de l'acétate de vinyle seul ou avec au moins un monomère copolymérisable, en présence d'au moins un alcool polyvinylique, puis éventuellement à ajouter au moins un agent de plastification au latex formé et est caractérisé en ce que le milieu de polymérisation, dont le pH est compris entre 2,5 et 6, contient de l'eau, 40 à 65% en poids du milieu d'acétate de vinyle ou d'un mélange acétate de vinyle-monomère copolymérisable, 1 à 10% en poids du ou des monomères d'au moins un agent limiteur de chaine et 0,5 à 3% en poids du mélange monomère(s)-agent limiteur de chaine d'au moins un alcool polyvinylique et en ce que l'agent de plastification représente 0 à 30% en poids du polymère formé.

7. Procédé suivant la revendication 6, caractérisé en ce que l'agent limiteur de chaine est un hydrocarbure halogéné ou un mercaptan.

8. Procédé suivant les revendications 6 et 7, caractérisé en ce que la polymérisation est effectuée en présence d'au moins un initiateur et éventuellement d'un ou plusieurs agents émulsifiants et/ou d'un ou plusieurs régulateurs de pH.

9. Procédé suivant les revendications 6–8 caractérisé en ce que la température de polymérisation est comprise entre 25 et 90 °C.

**Revendications pour l'Etat contractant: AT**

1. Procédé de préparation de colles ayant un temps de prise inférieur à 10 secondes, à base de latex aqueux d'homo- ou copolymère d'acétate de vinyle plastifié, dont la concentration en matières sèches est comprise entre 50 et 70% en poids et la taille des particules de polymère d'acétate de vinyle ayant une masse moléculaire en poids de 10 000 à 300 000 est comprise entre 0,1 et 3 µm, qui consiste à polymériser en émulsion aqueuse de l'acétate de vinyle seul ou avec au moins un monomère copolymérisable, en présence d'au moins un alcool polyvinylique, puis éventuellement à ajouter au moins un agent de plastification au latex formé et est caractérisé en ce que le milieu de polymérisation, dont le pH est compris entre 2,5 et 6, contient de l'eau, 40 à 65% en poids du milieu d'acétate de vinyle ou d'un mélange acétate de vinylemonomère copolymérisable, 1 à 10% en poids du ou des monomères d'au moins un agent limiteur de chaine et 0,5 à 3% en poids du mélange monomère(s)-agent limiteur de chaine d'au moins un alcool polyvinylique et en ce que l'agent de plastification représente 0 à 30% en poids du polymère formé.

2. Procédé selon la revendication 1, caractérisé en ce que le monomère copolymérisable est un ester d'acide insaturé mono- ou di-carboxylique (3–6C) et d'alcool (1–10C), un ester vinylique d'acide saturé monocarboxylique (3–15C), une oléfine (2–5C), du chlorure de vinyle, ou du chlorure de vinylidène.

3. Procédé selon les revendications 1 ou 2, caractérisé en ce que l'agent limiteur de chaine est un hydrocarbure halogéné ou un mercaptan.

4. Procédé selon les revendications 1 à 3, caractérisé en ce que le ou les alcools polyvinyliques possèdent une viscosité comprise entre 2 et 50 mPa.s et un indice d'ester compris entre 80 et 180.

5. Procédé selon les revendications 1 à 4, caractérisé en ce que la polymérisation est effectuée en présence d'au moins un initiateur et éventuellement d'un ou plusieurs agents émulsifiants et/ou d'un ou plusieurs régulateurs de pH.

6. Procédé suivant les revendications 1 à 5, caractérisé en ce que la température de polymérisation est comprise entre 25 et 90 °C.

7. Procédé selon les revendications 1 à 6, caractérisé en ce que l'agent de plastification, seul ou en mélange, est choisi parmi les phtalates d'alkyle (4–6C) halogénés ou non, les phtalate, adipate, dibenzoate d'éthylène glycol, l'acétate de butylcarbitol, le glycolate de butyle, la triacétine de glycérol, les succinates, glutarates, adipates dipropyliques ou diisobutyliques, les phosphates de tricrésyle et de triphényle.

**Patentansprüche für die Vertragsstaaten: BE, CH, DE, FR, GB, IT, U, LU, NL, SE**

1. Klebstoffe auf Basis von wässrigem Latex aus weichgemachtem Vinylacetatpolymer, der wenigstens einen Polyvinylalkohol als Schutzkolloid enthält, dadurch gekennzeichnet, dass die Konzentration an Trockensubstanz in dem Latex zwischen 50 und 70 Gew.-% beträgt, die Teilchengrösse des Vinylacetatpolymeren, das ein Molekulargewicht zwischen 10 000 und 300 000 besitzt, zwischen 0,1 und 3 µm liegt, der oder die Polyvinylalkohole zwischen 0,5 und 3 Gew.-% des Polymeren ausmachen und ein eventuell zugesetzter Weichmacher zwischen 0 und 30 Gew.-% des Polymeren betragen kann und dadurch, dass ihre Härtezeit weniger als 10 Sekunden beträgt.

2. Klebstoffe nach Anspruch 1, dadurch gekennzeichnet, dass das Vinylacetatpolymer ein Homopolymer ist.

3. Klebstoffe nach Anspruch 1, dadurch gekennzeichnet, dass das Vinylacetatpolymer ein Copolymer dieses Monomeren mit einem copolymerisierbaren Monomeren ist, wie den Estern aus ungesättigten Mono- oder Dicarbonsäuren (3–6C) und Alkoholen (1–10C), den Vinylestern von gesättigten Monocarbonsäuren (3–15C), den Olefinen (2–5C), dem Vinylchlorid, und dem Vinylidenchlorid.

4. Klebstoffe nach den Ansprüchen 1 bis 3, dadurch gekennzeichnet, dass der oder die Polyvinylalkohole eine Viskosität zwischen 2 und 50 mPa.s und eine Esterzahl zwischen 80 und 180 besitzen.

5. Klebstoffe nach den Ansprüchen 1 bis 4, dadurch gekennzeichnet, dass der Weichmacher allein oder in Mischung ausgewählt wird unter den halogenierten oder nicht halogenierten Alkylphthalaten mit 4 bis 6 C-Atomen in der Alkylgruppe, dem Ethylenglykolphthalat, -adipat und -dibenzoat, Butylcarbitolacetat, Butylglykolat, Glyzerintriacetat, Dipropyl- oder Diisobutylsuccinat, -glutarat, -adipat, Tricresylphosphat und Triphenylphosphat.

6. Verfahren zur Herstellung von Klebstoffen nach den Ansprüchen 1 bis 5, das darin besteht, in einer wässrigen Emulsion von Vinylacetat allein oder mit wenigstens einem copolymerisierbaren Monomeren in Gegenwart von wenigstens einem Polyvinylalkohol zu polymerisieren und gegebenenfalls anschliessend dem gebildeten Latex wenigstens einen Weichmacher zuzusetzen und das dadurch charakterisiert ist, dass das Polymerisationsmilieu, dessen pH-Wert zwischen 2,5 und 6 liegt, Wasser enthält, zwischen 40 und 65 Gew.-% des Milieus an Vinylacetat oder an einer Mischung von Vinylacetat und copolymerisierbarem Monomeren, zwischen 1 und 10 Gew.-% des oder der Monomeren an wenigstens einem Kettenlimitierungsmittel und 0,5 bis 3 Gew.-% der Mischung Monomer-Kettenlimitierungsmittel an wenigstens einem Polyvinylalkohol, und dadurch, dass der Weichmacher zwischen 0 und 30 Gew.-% des gebildeten Polymeren beträgt.

7. Verfahren nach Anspruch 6, dadurch gekennzeichnet, dass das Kettenlimitierungsmittel ein halogenierter Kohlenwasserstoff oder ein Mercaptan ist.

8. Verfahren nach den Ansprüchen 6 und 7, dadurch gekennzeichnet, dass die Polymerisation in Gegenwart von wenigstens einem Initiator und eventuell einem oder mehreren Emulgiermittel und/oder einem oder mehrere pH-Regulatoren durchgeführt wird.

9. Verfahren nach den Ansprüchen 6 bis 8, dadurch gekennzeichnet, dass die Polymerisationstemperatur zwischen 25 und 90 °C liegt.

**Patentansprüche für den Vertragsstaat: AT**

1. Verfahren zur Herstellung von Klebstoffen mit einer Härtezeit unter 10 Sekunden auf Basis von wässrigem Latex aus weichgemachtem homo- oder copolymeren Vinylacetat, dessen Konzentration an Trockensubstanz zwischen 50 und 70 Gew.-% beträgt und bei dem die Teilchen aus Vinylacetatpolymeren mit einem Molekulargewicht zwischen 10 000 und 300 000 eine Grösse zwischen 0,1 und 3 µm besitzen, das darin besteht, in einer wässrigen Emulsion von Vinylacetat allein oder in Mischung mit wenigstens einem copolymerisierbaren Monomeren in Gegenwart von wenigstens einem Polyvinylalkohol zu polymerisieren und anschliessend eventuell dem gebildeten Latex wenigstens einen Weichmacher zuzusetzen, und dadurch gekennzeichnet ist, dass das Polymerisationsmilieu, dessen pH-Wert zwischen 2,5 und 6 liegt, Wasser enthält, 40 bis 65 Gew.-% des Milieus an Vinylacetat oder an einer Mischung von Vinylacetat mit copolymerisierbaren Monomeren, 1 bis 10 Gew.-% des oder der Monomeren an wenigstens einem kettenlimittierenden Mittel und 0,5 bis 3 Gew.-% der Mischung Monomer-kettenlimitierendes Mittel an wenigstens einem Polyvinylalkohol, und dadurch, dass der Weichmacher zwischen 0 und 30 Gew.-% des gebildeten Polymeren ausmacht.

2. Verfahren nach Anspruch 1, dadurch gekennzeichnet, dass das copolymerisierbare Monomer ein Ester einer ungesättigten Mono- oder Dicarbonsäure (3–6C) und eines Alkohols (1–10C), ein Vinylester einer gesättigten Monocarbonsäure (3–15C), ein Olefin (2–5C), Vinylchlorid, oder Vinylidenchlorid ist.

3. Verfahren nach den Ansprüchen 1 oder 2, dadurch gekennzeichnet, dass das kettenlimitierende Mittel ein halogenierter Kohlenwasserstoff oder ein Mercaptan ist.

4. Verfahren nach den Ansprüchen 1 bis 3, dadurch gekennzeichnet, dass der oder die Polyvinylalkohole eine Viskosität zwischen 2 und 50 mPa.s und eine Esterzahl zwischen 80 und 180 besitzen.

5. Verfahren nach den Ansprüchen 1 bis 4, dadurch gekennzeichnet, dass die Polymerisation in Gegenwart von wenigstens einem Initiator und eventuell einem oder mehreren Emulgiermitteln und/oder einem oder mehreren pH-Regulatoren durchgeführt wird.

6. Verfahren nach den Ansprüchen 1 bis 5, dadurch gekennzeichnet, dass die Polymerisationstemperatur zwischen 25 und 90 °C liegt.

7. Verfahren nach den Ansprüchen 1 bis 6, dadurch gekennzeichnet, dass der Weichmacher, alleine oder in Mischung, ausgewählt wird unter den halogenierten oder nicht halogenierten Alkylphthalaten mit 4 bis 6 C-Atomen in der Alkylgruppe, Ethylenglykolphthalat, -adipat, -dibenzoat, Butylcarbitolacetat, Butylglykolat, Glyzerintriacetat, Dipropyl- oder Diisobutylsuccinat, -glutarat, -adipat, Tricresyl- und Triphenylphosphat.

**Claims for the contracting States: BE, CH, DE, FR, GB, IT, LI, LU, NL, SE**

1. Glues based on aqueous latex of plasticised vinyl acetate polymer containing at least one polyvinyl alcohol as a protective colloid, characterised in that, in the latex, the concentration in respect of dry materials is from 50 to 70% by weight, the size of the particles of vinyl acetate polymer having a molecular mass by weight of 10 000 to 300 000 is from 0,1 to 3 µm, the polyvinyl alcohol or alcohols represent from 0,5 to 3% by weight of the polymer and any plasticising agent may represent from 0 to 30% by weight of the polymer, and that the setting time thereof is less than 10 seconds.

2. Glues according to claim 1 characterised in that the vinyl acetate polymer is a homopolymer.

3. Glues according to claim 1 characterised in that the vinyl acetate polymer is a copolymer of that monomer with a copolymerisable monomer represented by the esters of unsaturated mono- or di-carboxylic (3–6C) acids and alcohols (1–10C), vinyl ester of saturated monocarboxylic (3–15C) acids, olefins (2–5C), vinyl chloride and vinylidene chloride.

4. Glues according to claims 1 to 3 characterised in that the polyvinyl alcohol or alcohols have a viscosity of from 2 to 50 mPa.s and an ester value of from 80 to 180.

5. Glues according to claims 1 to 4 characterised in that the plasticising agent, alone or in mixture, is selected from halogenated or unhalogenated alkyl phthalates (4–6C), ethylene glycol phthalate, adipate and dibenzoate, butyl carbitol acetate, butyl glycolate, glycerol triacetine, dipropyl or diisobutyl succinates, glutarates and adipates, and tricresyl and triphenyl phosphates.

6. A process for preparing the glues according to claims 1 to 5 which comprises polymerising in aqueous emulsion vinyl acetate alone or with at least one copolymerisable monomer, in the presence of at least one polyvinyl alcohol, then possibly adding at least one plasticising agent to the latex formed, and is characterised in that the polymerisation medium whose pH-value is from 2,5 to 6, contains water, from 40 to 65% by weight of the medium of vinyl acetate or a copolymerisable monomervinyl acetate mixture, from 1 to 10% by weight of the monomer or monomers of at least one chain limiting agent and from 0,5 to 3% by weight of the mixture of monomer(s) and chain limiting agent of at least one polyvinyl alcohol, and that the plasticising agent represents from 0 to 30% by weight of the polymer formed.

7. A process according to claim 6 characterised in that the chain limiting agent is a halogenated hydrocarbon or a mercaptan.

8. A process according to claims 6 and 7 characterised in that polymerisation is carried out in the presence of at least one initiating agent and optionally one or more emulsifying agents and/or one or more pH-regulating agents.

9. A process according to claims 6 to 8 characterised in that the polymerisation temperature is from 25 to 90 °C.

**Claims for the contracting State: AT**

1. A process for preparing glues having a setting time of less than 10 seconds, based on aqueous latex of plasticised vinyl acetate homopolymer or copolymer, in which the concentration in respect of dry materials is from 50 to 70% by weight and the size of the particles of vinyl acetate polymer having a molecular mass by weight of from 10 000 to 300 000 is from 0,1 to 3 µm, which comprises polymerising in aqueous emulsion vinyl acetate alone or with at least one copolymerisable monomer, in the presence of at least one polyvinyl alcohol, then possibly adding at least one plasticising agent to the latex formed, and is characterised in that the polymerisation medium whose pH-value is from 2,5 to 6, contains water, from 40 to 65% by weight of the medium of vinyl acetate or a copolymerisable monomer-vinyl acetate mixture, from 1 to 10% by weight of the monomer or monomers of at least one chain limiting agent and from 0,5 to 3% by weight of the mixture of monomer(s) and chain limiting agent of at least one polyvinyl alcohol, and that the plasticising agent represents from 0 to 30% by weight of the polymer formed.

2. A process according to claim 1 characterised in that the copolymerisable monomer is an ester of unsaturated mono- or di-carboxylic acid (3–6C) and alcohol (1–10C), a vinyl ester of saturated monocarboxylic acid (3–15C), an olefin (2–5C), vinyl chloride or vinylidene chloride.

3. A process according to claim 1 or claim 2 characterised in that the chain limiting agent is a halogenated hydrocarbon or a mercaptan.

4. A process according to claims 1 to 3 characterised in that the polyvinyl alcohol or alcohols have a viscosity of from 2 to 50 mPa.s and an ester value of from 80 to 180.

5. A process according to claims 1 to 4 characterised in that polymerisation is carried out in the presence of at least one initiating agent and optionally one or more emulsifying agents and/or one or more pH-regulating agents.

6. A process according to claims 1 to 5 characterised in that the polymerisation temperature is from 25 to 90 °C.

7. A process according to claims 1 to 6 characterised in that the plasticising agent, alone or in mixture, is selected from halogenated or unhalogenated alkyl phthalates (4–6C), ethylene glycol phthalate, adipate and dibenzoate, butyl carbitol acetate, butyl glycolate, glycerol tricetine, dipropyl or diisobutyl succinates, glutarates and adipates, and tricresyl and triphenyl phosphates.